# FASCICULE DE BREVET EUROPEEN

(11) **EP 3 165 415 B1**
(45) Date de publication et mention de la délivrance du brevet: **03.06.2020**
(21) Numéro de dépôt: 16192890.8
(22) Date de dépôt: 07.10.2016
(51) Int. Cl.: B60S 1/40

(54) **ADAPTATEUR POUR UN ESSUIE-GLACE DE VÉHICULE AUTOMOBILE**
ADAPTER FÜR EIN KRAFTFAHRZEUGWISCHERBLATT
ADAPTER FOR A MOTOR VEHICLE WINDSCREEN WIPER

(30) Priorité: 04.11.2015 FR 1560589
(43) Date de publication de la demande: 10.05.2017
(73) Titulaire: Valeo Systèmes d'Essuyage, 78322 Le Mesnil Saint Denis (FR)
(72) Inventeur: HANINO, Marie-Therese, 63270 Parent (FR); ESPINASSE, Philippe, 63114 COUDES (FR); GAUCHER, Vincent, 63720 ENNEZAT (FR); CAETANO, Thomas, 63270 St Maurice (FR)
(74) Mandataire: Valeo Systèmes d'Essuyage

(56) Documents cités:
- DE-A1-102010 062 928
- DE-A1-102011 053 090
- DE-A1-102013 104 900
- US-A1- 2015 258 967

## Description

### DOMAINE TECHNIQUE

La présente invention concerne notamment un adaptateur pour un essuie-glace, en particulier de véhicule automobile.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade*" (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est un élément qui est solidarisé au balai et qui est en général fixé directement sur la lame racleuse et/ou sur la structure porteuse de cette lame, alors que l'adaptateur est solidaire du bras. L'adaptateur est un élément intermédiaire qui permet la liaison et la fixation du connecteur sur le bras d'entraînement. Il est en général configuré pour être engagé dans une tête ou partie terminale en forme de chape et à section transversale en U du bras d'entraînement.

Chacun de ces organes (connecteur et adaptateur) comprend des moyens d'articulation configurés pour coopérer avec des moyens complémentaires de l'autre organe, pour définir au moins un axe transversal d'articulation des organes, qui est un axe d'articulation du balai vis-à-vis du bras. Dans la technique actuelle, l'un des organes, tels que le connecteur, comprend en général un axe physique sensiblement cylindrique qui définit l'axe d'articulation et qui est reçu dans un logement de forme complémentaire de l'autre organe.

L'adaptateur comporte en général un corps configuré pour être engagé dans la partie terminale du bras de façon à ce que ce corps s'étende au moins en partie entre deux jambes latérales sensiblement parallèles de la partie terminale. Le corps de l'adaptateur est relié à une extrémité à un carénage ou capotage, appelée couramment casquette, sur laquelle l'extrémité libre de la partie terminale vient en butée. Enfin, le corps de l'adaptateur comprend en général un bouton d'actionnement qui est engagé par encliquetage élastique dans un orifice d'une paroi transversale de la partie terminale, lorsque cette dernière est en butée sur la casquette, afin de verrouiller l'adaptateur vis-à-vis de la partie terminale dans cette position.

Un adaptateur permet d'associer un balai à un type particulier de partie terminale. Dans le cas des parties terminales précitées à section en U, il en existe plusieurs variétés. Ces variétés sont très proches en apparence mais diffèrent les unes des autres par des dimensions et en particulier par leurs largeurs ou dimensions latérales, la largeur d'une partie terminale étant définie par la distance entre les jambes latérales de la partie terminale et plus exactement par la distance entre les faces externes de ces jambes latérales.

Dans la technique actuelle, il existe autant de variétés d'adaptateur que de variétés de parties terminales en U, ce qui n'est pas pratique ni économique. Il existe donc un réel besoin d'un adaptateur universel apte à d'essuie-glace. On connait des documents DE 10 2010 062928 A1 et DE 10 2013 104900 A1 un adaptateur selon le préambule de la revendication 1.

L'invention propose une solution simple, efficace et économique.

### EXPOSE DE L'INVENTION

L'invention propose à cet effet un adaptateur pour un essuie-glace, en particulier de véhicule automobile, ledit adaptateur étant destiné à relier un balai d'essuie-glace à une partie terminale d'un bras d'entraînement, qui a en section transversale une forme sensiblement en U, ledit adaptateur comprenant un corps configuré pour être engagé dans ladite partie terminale de façon à ce que ledit corps s'étende au moins en partie entre deux jambes latérales sensiblement parallèles de la partie terminale, caractérisé en ce que ledit adaptateur comprend en outre deux parois latérales sensiblement parallèles qui s'étendent de part et d'autre dudit corps et qui sont écartés latéralement dudit corps pour autoriser l'insertion des jambes latérales de la partie terminale entre ledit corps et lesdites parois latérales, et en ce que les écartements latéraux entre le corps et lesdites parois latérales sont déterminés pour recevoir au moins deux parties terminales de bras ayant des dimensions latérales différentes, ledit corps de l'adaptateur ayant une forme générale allongée et comprenant à une première extrémité longitudinale un carénage ou un capotage, lesdites parois latérales s'étendant depuis ledit carénage ou capotage du côté d'une seconde extrémité longitudinale de l'adaptateur, sensiblement parallèlement à des face latérales dudit carénage ou capotage et/ou sensiblement dans le prolongement de ces faces latérales.

Par « dimensions latérales différentes », on entend une différence d'au moins 1 mm, de préférence d'au moins 2 mm, et plus préférablement encore d'au moins 3 mm ou plus.

En d'autres termes, cette différence est sensiblement supérieure aux tolérances dimensionnelles admises compte tenu du procédé de fabrication, lesquelles sont généralement inférieures à 0,5 mm, et en principe plutôt de l'ordre de 0,1 mm.

Par exemple, grâce à l'adaptateur de la présente invention, on pourra relier un même balai d'essuie-glace à une pièce terminale en U d'un premier type dans laquelle l'écart entre les branches du U est sensiblement de 19 mm ou bien à une pièce terminale en U d'une deuxième type dans laquelle l'écart entre les branches du U est sensiblement de 22 mm.

La présente invention propose ainsi un adaptateur universel pour des bras à parties terminales en U de différentes largeurs ou dimensions latérales. Peu importe la dimension latérale d'une partie terminale, les jambes de celle-ci sont destinées à s'insérer entre le corps et les parois latérales de l'adaptateur. Selon la dimension latérale de la partie terminale, ses jambes peuvent être plus ou moins proches du corps et plus ou moins éloignés des parois latérales de l'adaptateur. Les jambes latérales d'une partie terminale de faible largeur peuvent par exemple affleurer le corps de l'adaptateur, et les jambes latérales d'une partie terminale de grande largeur peuvent par exemple affleurer les parois latérales de l'adaptateur. Les jambes latérales d'une partie terminale de largeur moyenne pourraient être situées à distance du corps et des parois latérales de l'adaptateur.

Par ailleurs, du fait du recouvrement d'au moins une partie des jambes de la partie terminale par les parois latérales de l'adaptateur, il n'est pas facile, pour un utilisateur, de distinguer les éventuels jeux latéraux entre les jambes et les parois latérales, ce qui permet d'améliorer l'esthétique de l'ensemble.

L'adaptateur selon l'invention peut comprendre une ou plusieurs des caractéristiques suivantes, prises isolément ou en combinaison les unes avec les autres :
- ledit adaptateur comportant des premiers moyens de liaison configurés pour coopérer avec ladite partie terminale et des seconds moyens de liaison configurés pour coopérer avec ledit balai,
- lesdites parois latérales sont reliées entre elles à leurs extrémités supérieures par une paroi supérieure, ladite paroi supérieure s'étendant au-dessus dudit corps et étant écarté dudit corps pour autoriser l'insertion d'une paroi transversale de la partie terminale entre ladite paroi supérieure et ledit corps,

- l'écartement entre ledit corps et chacune desdites parois latérales est supérieur à l'écartement entre ledit corps et ladite paroi supérieure,
- ladite paroi supérieure s'étend depuis ledit carénage ou capotage du côté d'une seconde extrémité longitudinale de l'adaptateur, sensiblement parallèlement à une face supérieure dudit carénage et/ou sensiblement dans le prolongement de cette face supérieure,
- ledit corps comprend des moyens de fixation par encliquetage élastique, configurés pour coopérer avec ladite partie terminale,
- lesdits moyens de fixation comprennent une première languette élastiquement déformable et reliée à une extrémité libre à un premier bouton d'actionnement,
- lesdits moyens de fixation comprennent une seconde languette élastiquement déformable et reliée à une extrémité libre à un second bouton d'actionnement, lesdits premiers et seconds boutons d'actionnement étant juxtaposés l'un derrière l'autre le long d'un axe longitudinal de l'adaptateur,
- le ou chaque bouton d'actionnement est situé dans une lumière ou fente de ladite paroi supérieure,
- lesdites parois latérales ont une longueur le long d'un axe longitudinal de l'adaptateur, qui représente moins de 40% de la longueur totale de l'adaptateur, et
- lesdites parois latérales ont une longueur le long d'un axe longitudinal de l'adaptateur, qui représente plus de 60% de la longueur totale de l'adaptateur.

La présente invention concerne également un ensemble comportant un adaptateur selon l'une des revendications précédentes et au moins deux bras d'entraînement, pour un essuie-glace, en particulier de véhicule automobile, chacun desdits bras comprenant une partie terminale ayant en section transversale une forme sensiblement en U et comportant deux jambes latérales définissant une dimension latérale de la partie terminale, un premier des bras comportant une partie terminale de dimension latérale L1 et un second des bras comportant une partie terminale de dimension latérale L2, différente de L1, dans lequel l'adaptateur peut être monté indifféremment sur l'une ou l'autre des parties terminales.

De préférence, lorsque l'adaptateur est monté sur la partie terminale de dimension latérale L1, les jambes latérales de cette partie terminale sont plus proches du corps de l'adaptateur que de ses parois latérales, et lorsque l'adaptateur est monté sur la partie terminale de dimension latérale L2, les jambes latérales de cette partie terminale sont plus proches des parois latérales de l'adaptateur que de son corps.

Avantageusement, ledit écartement entre ledit corps et chacune desdites parois latérales est compris entre 1,5 fois et 2,5 fois l'épaisseur desdites jambes latérales de la ou chaque partie terminale. Ledit écartement entre ledit corps et ladite paroi latérale peut être compris entre 1 fois et 1,5 fois l'épaisseur de ladite paroi transversale de la ou chaque partie terminale.

La présente invention concerne également un balai ou un bras d'essuie-glace, caractérisé en ce qu'il comprend ou porte un adaptateur tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace, cet essuie-glace comportant un balai d'essuie-glace, un bras d'entraînement du balai, et un système de connexion du balai au bras,
- la figure 2 est une vue schématique en perspective et à plus grande échelle de deux bras différents et d'un système de connexion comportant un adaptateur selon l'invention, en position démontée,
- les figures 3 et 4 sont des vues schématiques en perspective du système de connexion et de l'un des deux bras de la figure 2, en position montée, vus respectivement de côté et de dessous,
- les figures 5 et 6 sont des vues schématiques en perspective du système de connexion et de l'autre des deux bras de la figure 2, en position montée, vus respectivement de côté et de dessous,
- les figures 7 et 8 sont des vues schématiques en perspective de l'adaptateur de la figure 2, vu respectivement de côté et de dessous,
- la figure 9 est une vue schématique en perspective de trois bras différents et d'un système de connexion comportant un adaptateur selon l'invention, en position démontée,
- les figures 10 et 11 sont des vues schématiques en perspective de l'adaptateur de la figure 9, vu respectivement de côté et de l'arrière,
- la figure 12 est une vue en perspective et en coupe longitudinale de l'adaptateur de la figure 9, et
- les figures 13 et 14 sont des vues schématiques en perspective des moyens de fixation de l'adaptateur de la figure 9, vus respectivement de côté et de dessous.

### DESCRIPTION DETAILLEE

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

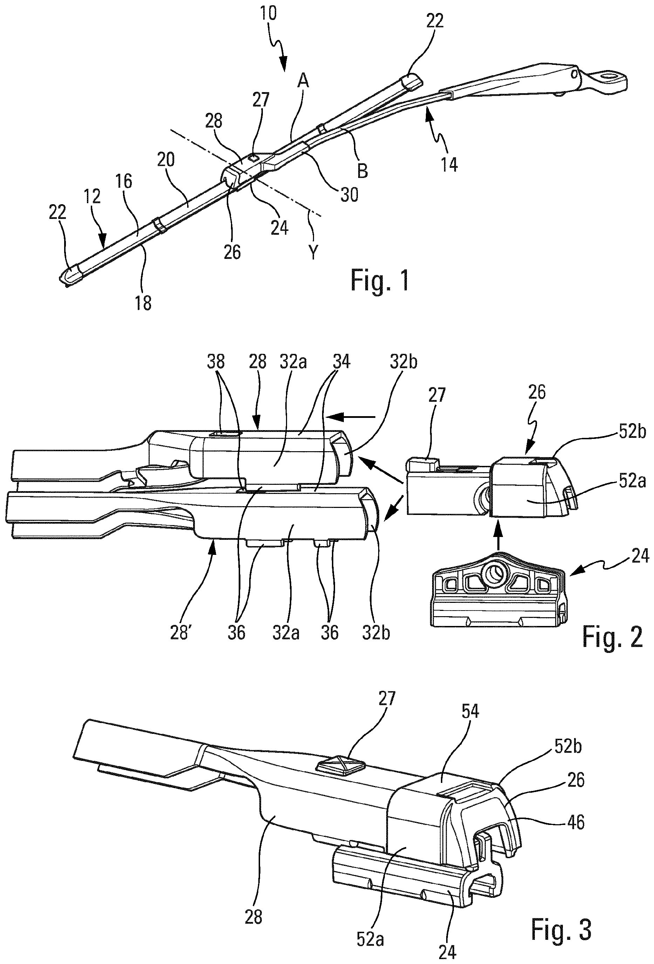

Il est illustré à la figure 1 un essuie-glace 10 comportant notamment un balai 12 et un bras 14 d'entraînement du balai 12.

Le balai 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai 12 comprend sensiblement en son milieu un connecteur 24 intermédiaire. Un adaptateur 26 solidaire du bras 14 est monté sur le connecteur 24 de façon à garder un degré de liberté en pivotement autour d'un axe d'articulation Y qui est un axe transversal sensiblement perpendiculaire à l'axe longitudinal du balai 12. Ce degré de liberté autorise un pivotement du balai 12 vis-à-vis du bras 14 et permet ainsi au balai de suivre la courbure du pare-brise lors de ses déplacements. L'adaptateur 26 peut être désolidarisé du bras 14 par appui sur un bouton d'actionnement, ici un bouton poussoir 27, porté par l'adaptateur.

Le bras 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai 12 au bras 14 et en particulier à une tête ou partie terminale 28 du bras qui peut être formée d'une seule pièce avec le bras ou rapportée et fixée sur celui-ci.

Dans le cadre de la présente invention, la partie terminale 28 du bras, mieux visible en figure 2, forme une chape à section transversale sensiblement en U.

La partie terminale 28 a une forme allongée dont l'axe d'allongement A est en général sensiblement parallèle à l'axe d'allongement ou longitudinal du balai 12. La partie terminale 28 comprend une partie 30 de liaison au reste du bras 14, par exemple par sertissage. Cette partie 30 a une forme générale allongée et s'étend le long d'un axe B sensiblement parallèle à l'axe A et à distance de cet axe, comme cela est visible aux figures 1 et 2. La partie 30 est reliée à une extrémité arrière ou intérieure de du reste de la partie terminale 28.

La partie terminale 28 comprend deux jambes latérales 32a, 32b dont les bords longitudinaux supérieurs sont reliés entre eux par une paroi transversale supérieure 34. Les jambes 32a, 32b et la paroi 34 délimitent entre elles un espace de logement de l'adaptateur 26. Les jambes 32a, 32b comprennent au niveau de leurs bords longitudinaux inférieurs des moyens 36, tels que des crochets, de retenue de l'adaptateur 26 dans l'espace précité.

La paroi supérieure 34 comprend une ouverture 38 traversante de forme complémentaire du bouton poussoir 27. En position de montage, le bouton poussoir 27 est logé dans cette ouverture 38 et peut traverser cette dernière de façon à être en saillie sur la face supérieure de la paroi 34. Le montage du bouton poussoir 27 dans l'ouverture 38 se fait par simple engagement ou emboîtement, de préférence par encliquetage élastique.

On définit L comme étant la largeur ou dimension latérale de la partie terminale 28, cette largeur (externe) L étant mesurée entre les jambes 32a, 32b et plus exactement entre les faces externes de celles-ci. La largeur interne L' est mesurée entre les faces internes des jambes 32a, 32b. Toute largeur est mesurée dans une direction sensiblement perpendiculaire à l'axe A et parallèle à la paroi 34. De plus, on définit par E, l'épaisseur de chaque jambe 32a, 32b, ce qui revient à l'épaisseur de la tôle utilisée pour fabriquer la partie terminale lorsque celle-ci est obtenue par emboutissage.

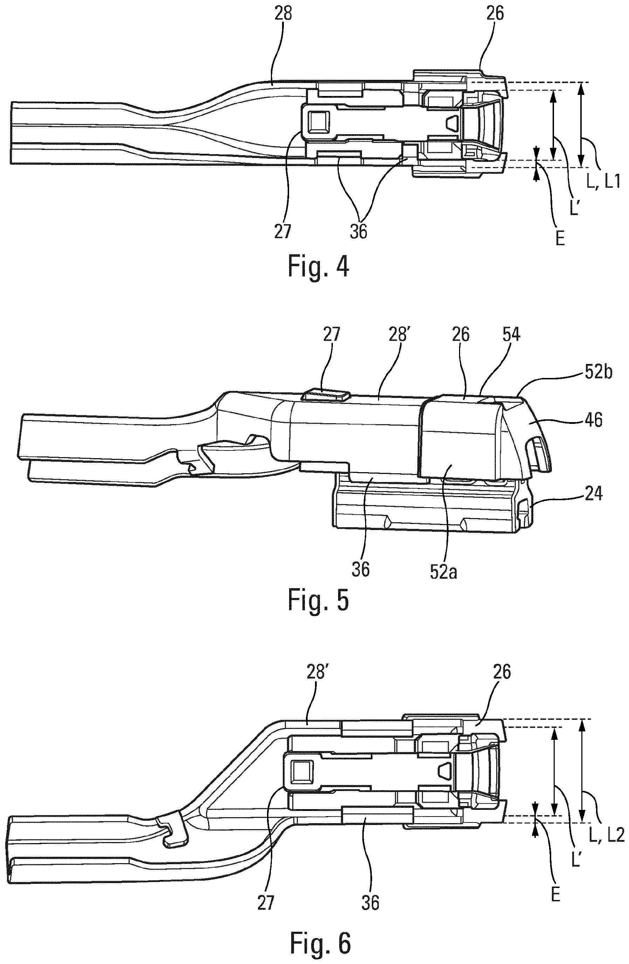

La figure 2 représente deux bras dont les parties terminales 28, 28' sont différentes. Ces parties terminales ont globalement la même forme mais diffèrent l'une de l'autre par des dimensions et en particulier par leurs largeurs. Ainsi, la partie terminale 28, également visible aux figures 3 et 4, a une largeur (externe) L1, et la partie terminale 28', également visible aux figures 5 et 6, a une largeur (externe) L2 qui est supérieure à L1.

Selon l'invention et comme représenté schématiquement par la figure 2, l'adaptateur 26 est du type « universel » et est destiné à être monté indifféremment sur l'une ou l'autre des parties terminales 28, 28'.

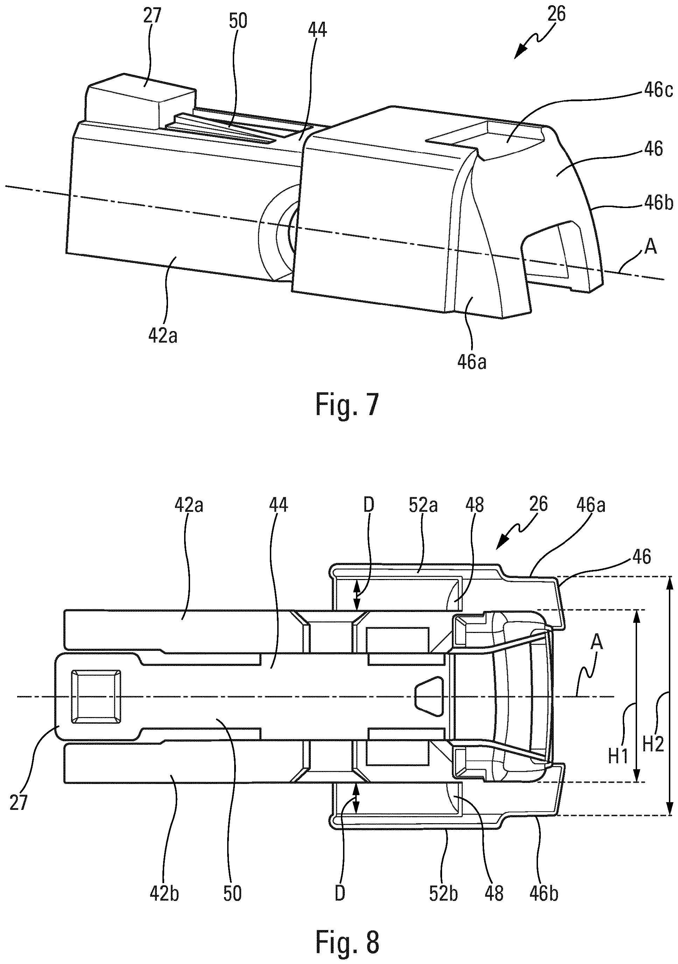

L'adaptateur 26, mieux visible aux figures 7 et 8, a une forme générale allongée le long de l'axe A. Il comprend un corps comportant deux parois latérales 42a, 42b sensiblement parallèles entre elles et à l'axe A, et à distance l'une de l'autre. Ces parois 42a, 42b sont reliées entre elles à leurs extrémités supérieures par une paroi transversale supérieure 44 sensiblement perpendiculaire aux parois 42a, 42b. Les parois 42a, 42b, 44 ont ici une forme allongée en direction longitudinale.

Comme cela est visible en figure 8, les parois 42a, 42b, 44 de l'adaptateur 26 définissent entre elles un espace longitudinal dans lequel est montée une partie du connecteur 24, visible en figure 2. Le connecteur 24 porte ici un axe transversal de pivotement sensiblement cylindrique destiné à être emboîté par encliquetage élastique dans des logements de forme complémentaire des parois 42a, 42b du corps de l'adaptateur 26.

Le corps de l'adaptateur 26 est relié à une première de ses extrémités longitudinales à un carénage ou capotage, aussi appelé casquette 46. Cette casquette 46 a une dimension latérale supérieure à celle du corps de l'adaptateur et une hauteur également supérieure à celle du corps. Les parois latérales 42a, 42b du corps de l'adaptateur sont ainsi en retrait ou décalées par rapport à des faces latérales (externes) 46a, 46b de la casquette, et sa paroi supérieure 44 est en retrait ou décalée par rapport à une face supérieure (externe) 46b de la casquette.

Les faces latérales 46a, 46b de la casquette 46 sont reliées aux parois latérales 42a, 42b du corps par des faces arrière 48, respectivement, qui s'étendent sensiblement perpendiculairement à l'axe A. La face supérieure 46c de la casquette 46 est reliée à la paroi supérieure 44 du corps par une autre face arrière (non visible) qui s'étend également sensiblement perpendiculairement à l'axe A.

Les faces arrière 48 de la casquette 46 forment des faces d'appui de l'extrémité extérieure ou avant de la partie terminale 28 ou 28'. Plus précisément, en position montée de l'adaptateur dans la partie terminale 28 ou 28', les bords libres avant des jambes latérales 32a, 32b de la partie terminale sont destinés à venir en appui sur les faces 48, et le bord libre avant de la paroi transversale 34 de la partie terminale est destiné à venir en appui sur l'autre face d'appui, non visible.

La paroi supérieure 44 du corps de l'adaptateur 26 comprend deux fentes longitudinales parallèles entre elles et à l'axe A et espacées l'une de l'autre. Elles définissent entre elles une languette longitudinale 50. Cette languette 50 est élastiquement déformable et est reliée à son extrémité libre arrière au bouton poussoir 27 précité. A l'état libre sans contrainte, la languette 50 est telle que le bouton poussoir 27 est en saillie sur la paroi supérieure 44.

L'adaptateur 26 comprend en outre deux parois latérales 52a, 52b sensiblement parallèles entre elles et à l'axe A. Ces parois s'étendent de part et d'autre du corps et sont écartées latéralement de ce corps pour autoriser l'insertion des jambes latérales 32a, 32b de la partie terminale 28 ou 28' entre le corps et les parois latérales 52a, 52b.

Les parois 52a, 52b sont reliées entre elles à leurs extrémités supérieures par une paroi transversale supérieure 54 sensiblement perpendiculaire aux parois 52a, 52b. Les parois 52a, 52b, 54 ont ici une forme allongée en direction longitudinale.

Les parois 52a, 52b, 54 s'étendent vers l'arrière depuis la casquette 46. Elles sont ici sensiblement parallèles aux faces latérales 46a, 46b et supérieure 46c, respectivement, de la casquette. Les parois 52a, 52b, 54 sont écartées latéralement du corps et définissent avec celui-ci une cavité de forme générale en U inversé.

La paroi 52a est en regard de la paroi 42a du corps et est écartée de celle-ci d'une distance D. La paroi 52b est en regard de la paroi 42b du corps et est écartée de celle-ci d'une même distance D. La paroi 54 est en regard de la paroi 44 du corps et est écartée de celle-ci d'une distance d, qui est inférieure à D.

Par ailleurs, on note H1, la distance ou dimension latérale entre les (faces externes des) parois latérales 42a, 42b du corps, et H2, la distance ou dimension latérale entre les (faces internes) des parois latérales 52a, 52b.

Dans l'exemple représenté, H1 est inférieure ou égale à L' et H2 est supérieure ou égale à L. De plus, D est supérieure à E et d est supérieure ou égale à E. D est de préférence comprise entre 1,5 fois et 2,5 fois l'épaisseur E. d est de préférence comprise entre 1 fois et 1,5 fois l'épaisseur E. Les écartements latéraux D entre le corps et les parois latérales 52a, 52b sont ainsi déterminés pour recevoir les deux parties terminales 28, 28'.

Comme cela est visible aux figures 3 et 4, lorsque l'adaptateur 26 est engagé dans la partie terminale 28, par translation axiale, de l'avant vers l'arrière, le long de l'axe A, les jambes 32a, 32b de la partie terminale s'étendent de part et d'autre du corps de l'adaptateur et affleurent ses parois latérales 42a, 42b, voire sont en contact avec celles-ci. Les crochets 36 de la partie terminale s'insèrent sous le corps de l'adaptateur pour le maintenir dans la partie terminale 28. Enfin, la partie terminale 28 est en appui par ses bords avant sur les faces arrière 48 de la casquette 46, et le bouton poussoir 27 est engagé dans l'ouverture 38 de la partie terminale. On constate dans la figure 4 que des jeux latéraux existent entre les jambes 32a, 32b et les parois latérales 52a, 52b de l'adaptateur. La paroi transversale 34 de la partie terminale 28 peut être engagée sensiblement sans jeu entre la paroi supérieure 44 du corps et la paroi supérieure 54.

En référence aux figures 5 et 6, lorsque l'adaptateur 26 est engagé dans la partie terminale 28', les jambes 32a, 32b de la partie terminale s'étendent de part et d'autre du corps de l'adaptateur et affleurent les parois 52a, 52b, voire sont en contact avec celles-ci. Les crochets 36 de la partie terminale s'insèrent sous le corps de l'adaptateur pour le maintenir dans la partie terminale 28. Enfin, la partie terminale 28' est en appui par ses bords avant sur les faces arrière 48 de la casquette 46, et le bouton poussoir 27 est engagé dans l'ouverture 38 de la partie terminale. On constate dans la figure 6 que des jeux latéraux existent entre les jambes 32a, 32b et les parois latérales 42a, 42b du corps de l'adaptateur. La paroi transversale 34 de la partie terminale 28' peut être engagée sensiblement sans jeu entre la paroi supérieure 44 du corps et la paroi supérieure 54.

Dans l'exemple représenté, les parois latérales 52a, 52b ont une longueur, le long de l'axe A, qui représente moins de 40% de la longueur totale de l'adaptateur 26.

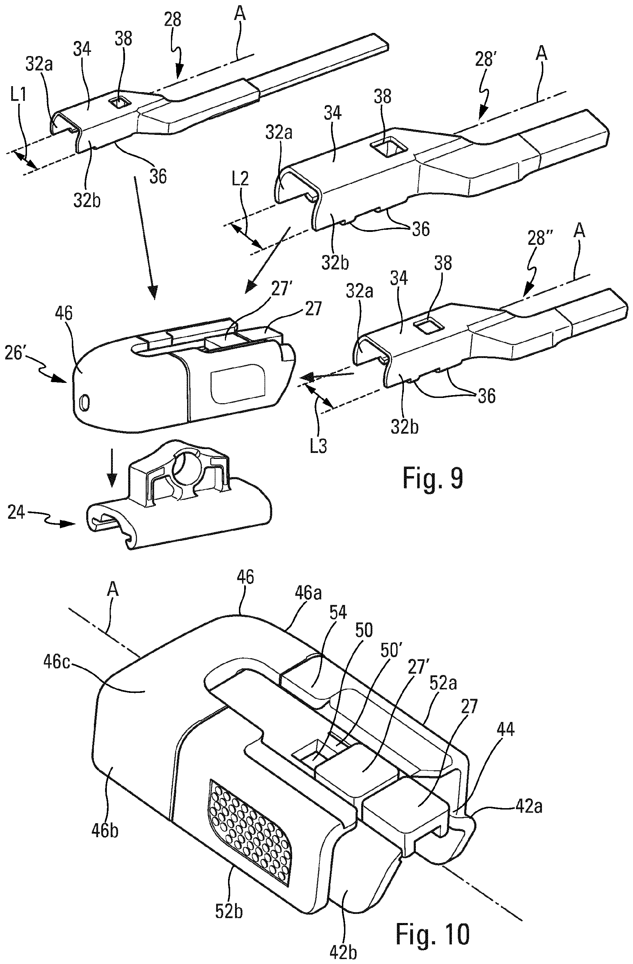

On se réfère maintenant aux figures 9 à 14 qui représentent une variante de réalisation de l'invention.

La figure 9 représente trois bras dont les parties terminales 28, 28', 28" sont différentes. Ces parties terminales ont globalement la même forme mais diffèrent l'une de l'autre par des dimensions et en particulier par leurs largeurs. Ainsi, la partie terminale 28 a une largeur L1, la partie terminale 28' a une largeur L2 qui est supérieure à L1, et la partie terminale a une largeur L3 qui est comprise entre L1 et L2. Toute largeur est mesurée dans une direction sensiblement perpendiculaire à l'axe A et parallèle à la paroi 34.

Comme représenté schématiquement pas la figure 9, l'adaptateur 26' est du type « universel » et est destiné à être monté indifféremment sur l'une ou l'autre des parties terminales 28, 28', 28".

L'adaptateur 26', mieux visible aux figures 10 à 12, a une forme générale allongée le long de l'axe A. Il comprend un corps comportant deux parois latérales 42a, 42b sensiblement parallèles entre elles et à l'axe A, et à distance l'une de l'autre. Ces parois 42a, 42b sont reliées entre elles à leurs extrémités supérieures par une paroi transversale supérieure 44 sensiblement perpendiculaire aux parois 42a, 42b. Les parois 42a, 42b, 44 ont ici une forme allongée en direction longitudinale.

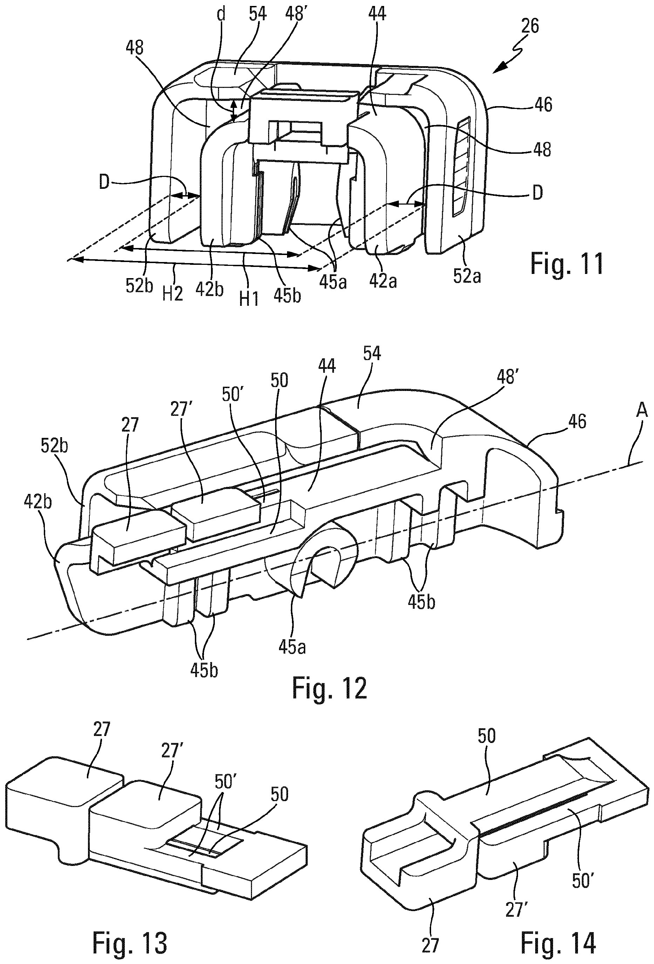

Comme cela est visible en figure 11, les parois 42a, 42b, 44 de l'adaptateur 26' définissent entre elles un espace longitudinal dans lequel est montée une partie du connecteur précité. Le connecteur est ici destiné à comprendre des logements de réception par encliquetage élastique de tourillons 45a des parois 42a, 42b du corps de l'adaptateur 26'. Ces tourillons 45a définissant un axe transversal de pivotement et sont visibles au figures 11 et 12. Ils sont en saillie sur les faces internes en regard des parois 42a, 42b. Les tourillons 45a sont situés entre et à distance de nervures 45b en saillie sur les faces des parois 42a, 42b. Ces nervures 45b s'étendent sensiblement perpendiculairement à l'axe A et sont configurées pour guider le montage du connecteur dans l'espace interne de l'adaptateur.

Le corps de l'adaptateur 26' est relié à une première de ses extrémités longitudinales à un carénage ou capotage, aussi appelé casquette 46. Cette casquette 46 a une dimension latérale supérieure à celle du corps de l'adaptateur et une hauteur également supérieure à celle du corps. Les parois latérales 42a, 42b du corps de l'adaptateur sont ainsi en retrait ou décalées par rapport à des faces latérales externes 46a, 46b de la casquette, et sa paroi supérieure 44 est en retrait ou décalée par rapport à une face supérieure externe 46b de la casquette.

Les faces latérales 46a, 46b de la casquette 46 sont reliées aux parois latérales 42a, 42b du corps par des faces arrière 48, respectivement, qui s'étendent sensiblement perpendiculairement à l'axe A. La face supérieure 46c de la casquette 46 est reliée à la paroi supérieure 44 du corps par une autre face arrière 48' qui s'étend également sensiblement perpendiculairement à l'axe A.

Les faces arrière 48, 48' de la casquette 46 forment des faces d'appui de l'extrémité extérieure ou avant de la partie terminale 28, 28' ou 28". Plus précisément, en position montée de l'adaptateur dans la partie terminale 28, 28' ou 28", les bords libres avant des jambes latérales 32a, 32b de la partie terminale sont destinés à venir en appui sur les faces 48, et le bord libre avant de la paroi transversale 34 de la partie terminale est destiné à venir en appui sur l'autre face d'appui 48'.

La paroi supérieure 44 du corps de l'adaptateur 26' comprend deux fentes longitudinales parallèles entre elles et à l'axe A, et espacées l'une de l'autre. Deux languettes longitudinales 50, 50' s'étendent entre ces fentes. Chaque languette 50, 50' est élastiquement déformable et est reliée à son extrémité libre arrière à un bouton poussoir 27, 27'. L'adaptateur 26 est ainsi équipé de deux boutons poussoirs 27 indépendants.

Les languettes 50, 50' et les boutons poussoirs 27, 27 sont mieux visibles aux figures 13 et 14. Une première languette 50, ici supérieure, comprend une unique branche longitudinale et porte le bouton poussoir 27 à son extrémité libre. La seconde languette 50', ici inférieure, comprend deux branches latérales parallèles et espacées, situées sensiblement de part et d'autre de la branche de la première languette 50 et sous celle-ci. Les extrémités libres des branches de la seconde languette 50' sont reliées au bouton poussoir 27' et ont des longueurs inférieures à la longueur de la branche de la languette 50, de façon à ce que les boutons 27, 27' soient disposés côté à côté, l'un derrière l'autre, le long de l'axe A.

A l'état libre sans contrainte, chaque languette 50, 50' est telle que le bouton poussoir 27, 27' est en saillie sur la paroi supérieure 44. Dans cette position, les boutons poussoirs 27, 27' peuvent avoir des faces supérieures d'appui sensiblement alignées ou bien au contraire décalées l'une par rapport à l'autre. Lors du montage de l'adaptateur 26' dans la partie terminale 28, 28 ou 28", un seul des boutons poussoirs est destiné à s'engager par encliquetage élastique dans l'ouverture 38 de la partie terminale.

L'adaptateur 26' comprend en outre deux parois latérales 52a, 52b sensiblement parallèles entre elles et à l'axe A. Ces parois s'étendent de part et d'autre du corps et sont écartées latéralement de ce corps pour autoriser l'insertion des jambes latérales 32a, 32b de la partie terminale 28, 28' ou 28" entre le corps et les parois latérales 52a, 52b.

Les parois 52a, 52b sont reliées entre elles à leurs extrémités supérieures par une paroi transversale supérieure 54 sensiblement perpendiculaire aux parois 52a, 52b. Les parois 52a, 52b, 54 ont ici une forme allongée en direction longitudinale.

Les parois 52a, 52b, 54 s'étendent vers l'arrière depuis la casquette 46. Elles s'étendent ici sensiblement dans le prolongement des faces latérales 46a, 46b et supérieure 46c, respectivement, de la casquette. Les parois 52a, 52b, 54 sont écartées latéralement du corps et définissent avec celui-ci une cavité de forme générale en U inversé.

La paroi 52a est en regard de la paroi 42a du corps et est écartée de celle-ci d'une distance D. La paroi 52b est en regard de la paroi 42b du corps et est écartée de celle-ci d'une même distance D. La paroi 54 est en regard de la paroi 44 du corps et est écartée de celle-ci d'une distance d, qui est inférieure à D. La paroi 54 comprend une fente longitudinale médiane 56 d'accès aux boutons poussoirs 27, 27'.

Par ailleurs, on note H1, la distance ou dimension latérale entre les (faces externes des) parois latérales 42a, 42b du corps, et H2, la distance ou dimension latérale entre les (faces internes) des parois latérales 52a, 52b.

Dans l'exemple représenté, H1 est inférieure ou égale à L' et H2 est supérieure ou égale à L. De plus, D est supérieure à E et d est supérieure ou égale à E. D est de préférence comprise entre 1,5 fois et 2,5 fois l'épaisseur E. d est de préférence comprise entre 1 fois et 1,5 fois l'épaisseur E. Les écartements latéraux D entre le corps et les parois latérales 52a, 52b sont ainsi déterminés pour recevoir les deux parties terminales 28, 28'.

Lorsque l'adaptateur 26' est engagé dans la partie terminale 28, par translation axiale, de l'avant vers l'arrière, le long de l'axe A, les jambes 32a, 32b de la partie terminale s'étendent de part et d'autre du corps de l'adaptateur et affleurent ses parois latérales 42a, 42b, voire sont en contact avec celles-ci. Les crochets 36 de la partie terminale s'insèrent sous le corps de l'adaptateur pour le maintenir dans la partie terminale 28. Enfin, la partie terminale 28 est en appui par ses bords avant sur les faces arrière 48, 48' de la casquette 46, et le bouton poussoir 27 est engagé dans l'ouverture 38 de la partie terminale. L'autre bouton poussoir 27' est en appui sur une face inférieure de la paroi 34 de la partie terminale 28. Des jeux latéraux existent entre les jambes 32a, 32b et les parois latérales 52a, 52b de l'adaptateur. La paroi transversale 34 de la partie terminale 28 peut être engagée sensiblement sans jeu entre la paroi supérieure 44 du corps et la paroi supérieure 54.

Lorsque l'adaptateur 26' est engagé dans la partie terminale 28', les jambes 32a, 32b de la partie terminale s'étendent de part et d'autre du corps de l'adaptateur et affleurent les parois 52a, 52b, voire sont en contact avec celles-ci. Les crochets 36 de la partie terminale s'insèrent sous le corps de l'adaptateur pour le maintenir dans la partie terminale 28. Enfin, la partie terminale 28' est en appui par ses bords avant sur les faces arrière 48, 48' de la casquette 46, et le bouton poussoir 27 est engagé dans l'ouverture 38 de la partie terminale. L'autre bouton poussoir 27' est en appui sur une face inférieure de la paroi 34 de la partie terminale 28'. Des jeux latéraux existent entre les jambes 32a, 32b et les parois latérales 42a, 42b du corps de l'adaptateur. La paroi transversale 34 de la partie terminale 28' peut être engagée sensiblement sans jeu entre la paroi supérieure 44 du corps et la paroi supérieure 54.

Lorsque l'adaptateur 26' est engagé dans la partie terminale 28", les jambes 32a, 32b de la partie terminale s'étendent de part et d'autre du corps de l'adaptateur et sont à distance des parois 42a, 42b, 52a, 52b. Les crochets 36 de la partie terminale s'insèrent sous le corps de l'adaptateur pour le maintenir dans la partie terminale 28. Enfin, la partie terminale 28' est en appui par ses bords avant sur les faces arrière 48, 48' de la casquette 46, et le bouton poussoir 27' est engagé dans l'ouverture 38 de la partie terminale. L'autre bouton poussoir 27 est en appui sur une face inférieure de la paroi 34 de la partie terminale 28". La paroi transversale 34 de la partie terminale 28' peut être engagée sensiblement sans jeu entre la paroi supérieure 44 du corps et la paroi supérieure 54.

Dans l'exemple représenté, les parois latérales 52a, 52b ont une longueur, le long de l'axe A, qui représente plus de 60% de la longueur totale de l'adaptateur.

## Revendications

1. Adaptateur (26, 26') pour un essuie-glace (10), en particulier de véhicule automobile, ledit adaptateur étant destiné à relier un balai (12) d'essuie-glace à une partie terminale (28, 28', 28") d'un bras d'entraînement (14), ladite partie terminale ayant en section transversale une forme sensiblement en U, ledit adaptateur comprenant un corps configuré pour être engagé dans ladite partie terminale de façon à ce que ledit corps s'étende au moins en partie entre deux jambes latérales (32a, 32b) sensiblement parallèles de la partie terminale, ledit adaptateur comprenant en outre deux parois latérales (52a, 52b) sensiblement parallèles qui s'étendent de part et d'autre dudit corps et qui sont écartées latéralement dudit corps pour autoriser l'insertion des jambes latérales de la partie terminale entre ledit corps et lesdites parois latérales, l'adaptateur étant **caractérisé en ce que** les écartements latéraux (D) entre le corps et lesdites parois latérales sont déterminés pour recevoir au moins deux parties terminales (28, 28', 28") de bras ayant des dimensions latérales (L1, L2, L3) différentes, ledit corps de l'adaptateur ayant une forme générale allongée et comprenant à une première extrémité longitudinale un carénage ou capotage, lesdites parois latérales (52a, 52b) s'étendant depuis ledit carénage ou capotage du côté d'une seconde extrémité longitudinale de l'adaptateur, sensiblement parallèlement à des faces latérales (46a, 46b) dudit carénage ou capotage et/ou sensiblement dans le prolongement de ces faces latérales.

2. Adaptateur (26, 26') selon l'une des revendications précédentes, dans lequel lesdites parois latérales (52a, 52b) sont reliées entre elles à leurs extrémités supérieures par une paroi supérieure (54), ladite paroi supérieure s'étendant au-dessus dudit corps et étant écarté dudit corps pour autoriser l'insertion d'une paroi transversale (34) de la partie terminale (28, 28', 28") entre ladite paroi supérieure et ledit corps.

3. Adaptateur (26, 26') selon la revendication 2, dans lequel l'écartement (D) entre ledit corps et chacune desdites parois latérales (52a, 52b) est supérieur à l'écartement (d) entre ledit corps et ladite paroi supérieure (54).

4. Adaptateur (26, 26') selon la revendication 2 ou 3, dans lequel ladite paroi supérieure (54) s'étend depuis ledit carénage ou capotage du côté d'une seconde extrémité longitudinale de l'adaptateur, sensiblement parallèlement à une face supérieure (46c) dudit carénage et/ou sensiblement dans le prolongement de cette face supérieure.

5. Adaptateur (26, 26') selon l'une des revendications précédentes, dans lequel ledit corps comprend des moyens (27, 27') de fixation par encliquetage élastique, configurés pour coopérer avec ladite partie terminale (28, 28', 28").

6. Adaptateur (26, 26') selon la revendication 5, dans lequel lesdits moyens de fixation comprennent une première languette (50) élastiquement déformable et reliée à une extrémité libre à un premier bouton d'actionnement (27).

7. Adaptateur (26, 26') selon la revendication 6, dans lequel lesdits moyens de fixation comprennent une seconde languette (50') élastiquement déformable et reliée à une extrémité libre à un second bouton d'actionnement (27'), lesdits premiers et seconds boutons d'actionnement étant juxtaposés l'un derrière l'autre le long d'un axe longitudinal (A) de l'adaptateur.

8. Adaptateur (26, 26') selon la revendication 7, en dépendance de l'une des revendications 2 à 4, dans lequel le ou chaque bouton d'actionnement (27, 27') est situé dans une lumière ou fente (56) de ladite paroi supérieure (54).

9. Adaptateur (26, 26') selon l'une des revendications précédentes, dans lequel lesdites parois latérales ont une longueur le long d'un axe longitudinal de l'adaptateur, qui représente moins de 40% de la longueur totale de l'adaptateur.

10. Adaptateur (26, 26') selon l'une des revendications 1 à 7, dans lequel lesdites parois latérales (52a, 52b) ont une longueur le long d'un axe longitudinal (A) de l'adaptateur, qui représente plus de 60% de la longueur totale de l'adaptateur.

11. Ensemble comportant un adaptateur (26, 26') selon l'une des revendications précédentes et au moins deux bras d'entraînement (14), pour un essuie-glace, en particulier de véhicule automobile, chacun desdits bras comprenant une partie terminale (28, 28', 28") ayant en section transversale une forme sensiblement en U et comportant deux jambes latérales (32a, 32b) définissant une dimension latérale (L) de la partie terminale, un premier des bras comportant une partie terminale (28) de dimension latérale L1 et un second des bras comportant une partie terminale (28') de dimension latérale L2, différente de L1, dans lequel l'adaptateur peut être monté indifféremment sur l'une ou l'autre des parties terminales.

12. Ensemble selon la revendication 11, dans lequel, lorsque l'adaptateur (26, 26') est monté sur la partie terminale (28) de dimension latérale L1, les jambes latérales (32a, 32b) de cette partie terminale sont plus proches du corps de l'adaptateur que de ses parois latérales (52a, 52b), et dans lequel, lorsque l'adaptateur est monté sur la partie terminale (28') de dimension latérale L2, les jambes latérales de cette partie terminale sont plus proches des parois latérales de l'adaptateur que de son corps.

13. Ensemble selon la revendication 11 ou 12, dans lequel ledit écartement (D) entre ledit corps et chacune desdites parois latérales (52a, 52b) est compris entre 1,5 fois et 2,5 fois l'épaisseur (E) desdites jambes latérales (32a, 32b) de chaque partie terminale (28, 28').

14. Balai (12) ou bras (14) d'essuie-glace (10), **caractérisé en ce qu'**il comprend ou porte un adaptateur (26, 26') selon l'une des revendications 1 à 10.

## Patentansprüche

1. Adapter (26, 26') für einen Scheibenwischer (10), insbesondere eines Kraftfahrzeugs, wobei der Adapter dazu bestimmt ist, ein Scheibenwischerblatt (12) mit einem Endteil (28, 28', 28") eines Antriebsarmes (14) zu verbinden, wobei der Endteil einen im Wesentlichen U-förmigen Querschnitt aufweist, wobei der Adapter einen Körper umfasst, der dafür ausgelegt ist, derart in den Endteil eingeführt zu werden, dass sich der Körper wenigstens teilweise zwischen zwei im Wesentlichen parallelen seitlichen Schenkeln (32a, 32b) des Endteils erstreckt, wobei der Adapter außerdem zwei im Wesentlichen parallele Seitenwände (52a, 52b) umfasst, welche sich beiderseits des Körpers erstrecken und welche von dem Körper seitlich beabstandet sind, um das Einsetzen der seitlichen Schenkel des Endteils zwischen den Körper und die Seitenwände zu ermöglichen,
wobei der Adapter **dadurch gekennzeichnet ist, dass** die seitlichen Abstände (D) zwischen dem Körper und den Seitenwänden dafür bemessen sind, wenigstens zwei Endteile (28, 28', 28") eines Armes mit unterschiedlichen seitlichen Abmessungen (L1, L2, L3) aufzunehmen, wobei der Körper des Adapters eine lang gestreckte allgemeine Form aufweist und an einem ersten Längsende eine Verkleidung oder Haube umfasst, wobei sich die Seitenwände (52a, 52b) von dieser Verkleidung oder Haube aus auf der Seite eines zweiten Längsendes des Adapters im Wesentlichen parallel zu seitlichen Flächen (46a, 46b) der Verkleidung oder Haube und/oder im Wesentlichen in der Verlängerung dieser seitlichen Flächen erstrecken.

2. Adapter (26, 26') nach einem der vorhergehenden Ansprüche, wobei die Seitenwände (52a, 52b) an ihren oberen Enden durch eine obere Wand (54) miteinander verbunden sind, wobei sich die obere Wand oberhalb des Körpers erstreckt und von dem Körper beabstandet ist, um das Einsetzen einer Querwand (34) des Endteils (28, 28', 28") zwischen die obere Wand und dem Körper zu ermöglichen.

3. Adapter (26, 26') nach Anspruch 2, wobei der Abstand (D) zwischen dem Körper und jeder der Seitenwände (52a, 52b) größer als der Abstand (d) zwischen dem Körper und der oberen Wand (54) ist.

4. Adapter (26, 26') nach Anspruch 2 oder 3, wobei sich die obere Wand (54) von der Verkleidung oder Haube aus auf der Seite eines zweiten Längsendes des Adapters im Wesentlichen parallel zu einer oberen Fläche (46c) der Verkleidung und/oder im Wesentlichen in der Verlängerung dieser oberen Fläche erstreckt.

5. Adapter (26, 26') nach einem der vorhergehenden Ansprüche, wobei der Körper Mittel (27, 27') zur Befestigung durch elastisches Einrasten umfasst, die dafür ausgelegt sind, mit dem Endteil (28, 28', 28") zusammenzuwirken.

6. Adapter (26, 26') nach Anspruch 5, wobei die Befestigungsmittel eine erste Zunge (50) umfassen, die elastisch verformbar ist und an einem freien Ende mit einer ersten Betätigungstaste (27) verbunden ist.

7. Adapter (26, 26') nach Anspruch 6, wobei die Befestigungsmittel eine zweite Zunge (50') umfassen, die elastisch verformbar ist und an einem freien Ende mit einer zweiten Betätigungstaste (27') verbunden ist, wobei die erste und die zweite Betätigungstaste unmittelbar hintereinander entlang einer Längsachse (A) des Adapters angeordnet sind.

8. Adapter (26, 26') nach Anspruch 7 in Abhängigkeit von einem der Ansprüche 2 bis 4, wobei sich die oder jede Betätigungstaste (27, 27') in einem Schlitz oder Spalt (56) der oberen Wand (54) befindet.

9. Adapter (26, 26') nach einem der vorhergehenden Ansprüche, wobei die Seitenwände eine Länge entlang einer Längsachse des Adapters aufweisen, welche weniger als 40 % der Gesamtlänge des Adapters entspricht.

10. Adapter (26, 26') nach einem der Ansprüche 1 bis 7, wobei die Seitenwände (52a, 52b) eine Länge entlang einer Längsachse (A) des Adapters aufweisen, welche mehr als 60 % der Gesamtlänge des Adapters entspricht.

11. Anordnung, welche einen Adapter (26, 26') nach einem der vorhergehenden Ansprüche und wenigstens zwei Antriebsarme (14) aufweist, für einen Scheibenwischer, insbesondere eines Kraftfahrzeugs, wobei jeder der Arme einen Endteil (28, 28', 28") umfasst, der einen im Wesentlichen U-förmigen Querschnitt aufweist und zwei seitliche Schenkel (32a, 32b) aufweist, die eine seitliche Abmessung (L) des Endteils definieren, wobei ein erster der Arme einen Endteil (28) mit einer seitlichen Abmessung L1 aufweist und ein zweiter der Arme einen Endteil (28') mit einer seitlichen Abmessung L2 aufweist, die von L1 verschieden ist, wobei der Adapter unterschiedslos an dem einen oder dem anderen der Endteile angebracht werden kann.

12. Anordnung nach Anspruch 11, wobei, wenn der Adapter (26, 26') an dem Endteil (28) mit der seitlichen Abmessung L1 angebracht ist, die seitlichen Schenkel (32a, 32b) dieses Endteils dem Körper des Adapters näher sind als seinen Seitenwänden (52a, 52b), und wobei, wenn der Adapter an dem Endteil (28') mit der seitlichen Abmessung L2 angebracht ist, die seitlichen Schenkel dieses Endteils den Seitenwänden des Adapters näher sind als seinem Körper.

13. Anordnung nach Anspruch 11 oder 12, wobei der Abstand (D) zwischen dem Körper und jeder der Seitenwände (52a, 52b) zwischen dem 1,5-Fachen und dem 2,5-Fachen der Dicke (E) der seitlichen Schenkel (32a, 32b) jedes Endteils (28, 28') liegt.

14. Scheibenwischerblatt (12) oder Arm (14) eines Scheibenwischers (10), **dadurch gekennzeichnet, dass** es bzw. er einen Adapter (26, 26') nach einem der Ansprüche 1 bis 10 umfasst oder trägt.

## Claims

1. Adapter (26, 26') for a windscreen wiper (10), in particular a motor vehicle windscreen wiper, said adapter being intended to connect a wiper blade (12) to an end part (28, 28', 28") of a driving arm (14), said end part having a substantially U-shaped cross section, said adapter comprising a body configured to be inserted into said end part such that said body extends at least in part between two substantially parallel lateral legs (32a, 32b) of the end part, **characterized in that** said adapter also comprises two substantially parallel lateral walls (52a, 52b) which extend on either side of said body and which are spaced apart laterally from said body in order to allow the lateral legs of the end part to be fitted between said body and said lateral walls, **characterized in that** the lateral spacings (D) between the body and said lateral walls are designed to receive at least two end parts (28, 28', 28") of arms having different lateral dimensions (L1, L2, L3), said body of the adaptor having an elongate overall shape and comprising a fairing or cowling at a first longitudinal end, said lateral walls (52a, 52b) extending from said fairing or cowling at a second longitudinal end of the adapter, in a manner substantially parallel to the lateral faces (46a, 46b) of said fairing or cowling and/or substantially in line with these lateral faces.

2. Adapter (26, 26') according to one of the preceding claims, wherein said lateral walls (52a, 52b) are connected together at their upper ends by an upper wall (54), said upper wall extending over said body and being spaced apart from said body so as to allow a transverse wall (34) of the end part (28, 28', 28") to be fitted between said upper wall and said body.

3. Adapter (26, 26') according to Claim 2, wherein the spacing (D) between said body and each of said lateral walls (52a, 52b) is greater than the spacing (d) between said body and said upper wall (54).

4. Adapter (26, 26') according to Claim 2 or 3, wherein said upper wall (54) extends from said fairing or cowling at a second longitudinal end of the adapter, in a manner substantially parallel to an upper face (46c) of said fairing and/or substantially in line with this upper face.

5. Adapter (26, 26') according to one of the preceding claims, wherein said body comprises means (27, 27') for fastening by elastic snap-fitting, said means being configured to cooperate with said end part (28, 28', 28").

6. Adapter (26, 26') according to Claim 5, wherein said fastening means comprise a first elastically deformable tongue (50) that is connected at a free end to a first actuation button (27).

7. Adapter (26, 26') according to Claim 6, wherein said fastening means comprise a second elastically deformable tongue (50') that is connected at a free end to a second actuation button (27'), said first and second actuation buttons being juxtaposed one behind the other along a longitudinal axis (A) of the adapter.

8. Adapter (26, 26') according to Claim 7, where dependent on Claim 7 and one of Claims 4 to 6, wherein the or each actuation button (27, 27') is situated in a hole or slot (56) in said upper wall (54).

9. Adapter (26, 26') according to one of the preceding claims, wherein said lateral walls have a length along a longitudinal axis of the adapter which represents less than 40% of the total length of the adapter.

10. Adapter (26, 26') according to one of Claims 1 to 7, wherein said lateral walls (52a, 52b) have a length along a longitudinal axis (A) of the adapter which represents more than 60% of the total length of the adapter.

11. Assembly comprising an adapter (26, 26') according to one of the preceding claims and at least two driving arms (14), for a windscreen wiper, in particular a motor vehicle windscreen wiper, each of said arms comprising an end part (28, 28', 28") that has a substantially U-shaped cross section and comprises two lateral legs (32a, 32b) that define a lateral dimension (L) of the end part, a first of the arms having an end part (28) of lateral dimension L1 and a second of the arms having an end part (28') of lateral dimension L2, different from L1, wherein the adapter can be mounted on either one of the end parts.

12. Assembly according to Claim 11, wherein, when the adapter (26, 26') is mounted on the end part (28) of lateral dimension L1, the lateral legs (32a, 32b) of this end part are closer to the body of the adapter than to its lateral walls (52a, 52b), and wherein, when the adapter is mounted on the end part (28') of lateral dimension L2, the lateral legs of this end part are closer to the lateral walls of the adapter than to its body.

13. Assembly according to Claim 11 or 12, wherein said spacing (D) between said body and each of said lateral walls (52a, 52b) is between 1.5 and 2.5 times the thickness (E) of said lateral legs (32a, 32b) of each end part (28, 28').

14. Blade (12) or arm (14) of a windscreen wiper (10), **characterized in that** it comprises or carries an adapter (26, 26') according to one of Claims 1 to 10.
